# EUROPEAN PATENT APPLICATION

(11) **EP 3 885 985 A2**
(43) Date of publication of application: **29.09.2021**
(21) Application number: 21164604.7
(22) Date of filing: 24.03.2021
(51) Int. Cl.: G06K 9/00

(54) **IMAGE LABELING METHOD, ELECTRONIC DEVICE, APPARATUS, AND STORAGE MEDIUM**

(30) Priority: 17.07.2020 CN 202010694368
(71) Applicant: BEIJING BAIDU NETCOM SCIENCE AND TECHNOLOGY CO. LTD., 100085 Beijing (CN)
(72) Inventor: YANG, Xue, BEIJING, 100085 (CN)
(74) Representative: Viering, Jentschura & Partner mbB Patent- und Rechtsanwälte

(57) **Abstract**

An image labeling method and apparatus, an electronic device, and a storage medium are provided, which are related to a field of image processing, and in particular to fields of artificial intelligence, computer vision and autonomous driving and the like. The image labeling method includes: determining image labeling factors, wherein the image labeling factors include an image to be labeled, and a labeling element corresponding to the image to be labeled; constructing an association relationship between the image labeling factors; and labeling the image to be labeled based on the labeling element and the association relationship. By applying embodiments of the present application, the labeling efficiency and a labeling capability of images may be improved.

## Description

### TECHNICAL FIELD

The present application relates to a field of image processing, and in particular to fields of artificial intelligence, computer vision and autonomous driving and the like.

### BACKGROUND

An image labeling may be to label objects in an image based on predetermined labeling rules, such as labeling a vehicle in an image using boxes, or labeling key points on a human face using dots, or the like. The image labeling may be applied to a field of static single frame images for labeling and may also be applied to a field of videos for labeling. For example, in a process of a video preview or video playback, an object is directly highlighted and labeled on a frame image of the video, so that the video has more targeted video processing. The image labeling may be applied to many fields, such as to locating obstacles in a field of autonomous driving, or to locking important video clue information in a field of video tracking, or the like.

### SUMMARY OF THE INVENTION

Embodiments of the present application provide an image labeling method and apparatus, an electronic device, and a storage medium, to improve the labeling efficiency and the labeling capability of the image.

In a first aspect, an embodiment of the present application provides an image labeling method, including:
determining image labeling factors, wherein the image labeling factors include an image to be labeled and labeling elements corresponding to the image to be labeled;
constructing an association relationship between the image labeling factors; and
labeling the image to be labeled based on the labeling elements and the association relationship.

In a second aspect, an embodiment of the present application provides an image labeling apparatus, including:
an image labeling factor determination module for determining image labeling factors, wherein the image labeling factors include an image to be labeled and labeling elements corresponding to the image to be labeled;
an association relationship construction module for constructing an association relationship between the image labeling factors; and
an image labeling module for labeling the image to be labeled based on the labeling elements and the association relationship.

In a third aspect, an embodiment of the present application provides an electronic device, including:
at least one processor; and
a memory communicatively connected to the at least one processor, wherein
the memory stores instructions executable by the at least one processor, the instructions, when executed by the at least one processor, enable the at least one processor to perform the image labeling method provided in the embodiment of the first aspect.

In a fourth aspect, a non-transitory computer readable storage medium for storing computer instructions is provided according to an embodiment of the present application. The computer instructions, when executed by a computer, cause the computer to perform the image labeling method provided in an embodiment of the first aspect.

In embodiments of the present application, an image to be labeled and a labeling element corresponding to the image to be labeled are determined as image labeling factors, and an association relationship between the image labeling factors is constructed, to label the image to be labeled based on the labeling element and the association relationship, to solve problems of a low labeling efficiency and an insufficient labeling capability and the like of existing image labeling tools, thereby improving the labeling efficiency and the labeling capability of the image.

It should be understood that content described in this section is not intended to identify key or important features of the embodiment of the present disclosure, nor is it intended to limit the scope of the present disclosure. Other features of the present disclosure will be easily understood through the following description.

### BRIEF DESCRIPTION OF THE DRAWINGS

The drawings are used to better understand the present solution and do not constitute definition to the present application. Among the drawings:
FIG. 1 is a flowchart of an image labeling method provided by an embodiment of the present application;
FIG. 2 is a flowchart of an image labeling method provided by an embodiment of the present application;
FIG. 3 is a schematic diagram of an effect of labeling obstacles and ground points provided by an embodiment of the present application;
FIG. 4 is a schematic diagram of an effect of labeling lane lines and key points provided by an embodiment of the present application;
FIG. 5 is a schematic diagram of an effect of labeling key points provided by an embodiment of the present application;
FIG. 6 is a schematic diagram of an effect of labeling key points provided by an embodiment of the present application;
FIG. 7 is a schematic diagram of an effect of semantic labeling provided by an embodiment of the present application;
FIG. 8 is a structural diagram of an image labeling apparatus provided by an embodiment of the present application; and
FIG. 9 is a structural schematic diagram of an electronic device used to implement an image labeling method based on an embodiment of the present application.

### DETAILED DESCRIPTION OF THE PREFERRED EMBODIMENTS

The exemplary embodiments of the present application are described below in conjunction with the accompanying drawings, which include various details of the embodiments of the present application to facilitate understanding, and should be regarded as merely exemplary. Therefore, those ordinarily skilled in the art should realize that various changes and modifications can be made to the embodiments described herein without departing from the scope and spirit of the present application. Likewise, for clarity and conciseness, descriptions of well-known functions and structures are omitted in the following description.

With the gradual maturity of artificial intelligence algorithms, face recognition, computer vision and automatic driving technologies have become main hot technologies. For this kind of technology, image processing is an essential link. In order to train the relevant image processing algorithms, it is often necessary to construct the processed image data in advance as sample data, for example, the image data with a labeling result is used as the sample data. In order to meet the labeling requirements in various application scenes, different types of image-class labeling tools are needed to provide support.

Most of the existing various image labeling tools are customized ones, which can only meet the labeling requirements in a single application scenario. For example, common image labeling tools include a box drawing tool, a dotting tool, and a line drawing tool. Among them, the box drawing tool is mainly applicable to the labeling scenes of the obstacles for automatic driving, positioning elements and a signboard, and traffic statistics, and etc. The dotting tool is mainly applicable to scenes such as face key points, limbs key points and vehicle parking spots under automatic parking scene. The line drawing tool is mainly applicable to scenes such as lane line labeling, parking spot labeling and semantic segmentation of automatic driving.

The maintenance and use costs of the image labeling tool that can only meet the labeling need of a single application scenario are high, and the image labeling tool cannot support application scenes with mixed labeling requirements. If it is necessary to label the images of application scenes with mixed labeling requirements, the images must be labeled in series by means of item splitting and thereafter the results are merged. In some lane line labeling scenes, for example, it may be desirable to label cut-off points of the lane lines, and at this time the lane line labeling need to be completed in the line drawing tool at first, then a picture with a lane line labeling result is imported into the dotting tool to finish the labeling of the cut-off points, which undoubtedly prolongs the labeling process and the labeling time, and causes low labeling efficiency and labeling capability.

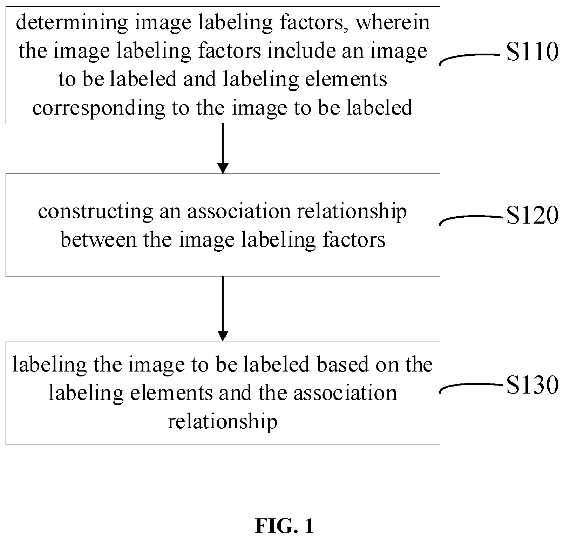

In an example, FIG. 1 is a flowchart of an image labeling method provided by an embodiment of the present application. This embodiment is applicable to the case where application scene images with different labeling requirements are labeled by using a unified image labeling tool. The method may be executed by an image labeling apparatus, and the apparatus may be implemented by means of software and/or hardware, and may generally be integrated in an electronic device. The electronic device may be a computer device. Correspondingly, as shown in FIG. 1, the method includes:

a step S110: determining image labeling factors, wherein the image labeling factors include an image to be labeled and labeling elements corresponding to the image to be labeled.

Where the image labeling factor may be an operation object in an image labeling scene, and may include, but is not limited to, an image to be labeled, and a labeling element corresponding to the image to be labeled. Where the image to be labeled is also an image that needs to be labeled. The labeling element may be used to label the image to be labeled, and the number of the labeling elements may be one or more, and embodiments of the present application do not limit the number of the labeling elements. In an alternative embodiment of the present application, the labeling elements may include, but is not limited to, a box element, a segmentation box element, a dot element, a line element, a region element, a cube element, and the like. In addition, the type of the labeling element can also be extended based on the actual requirements, such as a parallelogram, a hexagon or a trapezoid or the like, and the specific type of the labeling element is not limited in the embodiment of the present application. The diversified labeling elements can meet different labeling requirements of multiple image labeling scenes, including but not limited to a human face key point demand, a human body bone point requirement, an automatic parking demand, an automatic driving demand and a semantic labeling demand, and etc.

In an embodiment of the present application, the image labeling tool may be provided with a plurality of types of labeling elements, such as a box element, a segmentation box element, a dot element, a line element, a region element, a cube element, and the like. In addition, based on the labeling requirement of the labeling scene, the labeling elements in the image labeling tool can also be expanded. Correspondingly, when the image labeling tool including multiple labeling elements is used for image labeling, it is necessary to first determine the image labeling factor by using the image labeling tool, that is, to determine the image to be labeled and a labeling element corresponding to the image to be labeled.

A step S 120: constructing an association relationship between the image labeling factors.

Where the association relationship may be a combination relationship, an intersection relationship, or a constraint relationship between the image to be labeled and the labeled elements, or between the labeling elements.

Correspondingly, after the image labeling factors such as an image to be labeled and a labeling element corresponding to the image to be labeled are determined in the image labeling tool, the association relationship between the image labeling factors can be constructed by using an image labeling tool. For example, the combination relationship between the image to be labeled and the labeling element, and the constraint relationship between the labeling elements may be established. A labeling behavior between the image to be labeled and the labeling element or between the labeling elements can be agreed by constructing the association relationship between the image labeling factors. For example, the image to be labeled can be labeled only with the labeling element that has an association relationship with the image, and cannot be labeled by a labeling element that has no association relationship with the image.

A step S130: labeling the image to be labeled based on the labeling elements and the association relationship.

Correspondingly, after the association relationship between the image labeling factors is determined, the image to be labeled can be labeled based on the labeling elements and the association relationship therebetween.

Since the labeling elements may be multiple different types of labeling elements, such as a box element, a dot element, and a line element, and etc., that is, multiple different types of labeling elements may simultaneously label the image to be labeled, and thus may be applicable to icon labeling application scenes with mixed labeling requirements, such as a scene in which the lane line needs to be labeled with both the dot element and the line element, and an automobile is labeled with the box element. Meanwhile, the labeling element can also be a single labeling element, and thus is also applicable to the icon labeling application scene with a single labeling requirement, such as the scene in which the lane line is labeled by using only the line element. It can be seen that the image labeling method provided in the embodiments of the present application can realize that the application scene images with different labeling requirements are labeled by using a unified image labeling tool, thereby improving the labeling efficiency of the image.

Besides, since a labeling behavior between the image to be labeled and the labeling element or between the labeling elements is agreed by constructing the association relationship between the image labeling factors, therefore, labeling the image to be labeled must abide by the association relationship between the object to be labeled and the labeling element, or the association relationship between the labeling elements, so as to avoid labeling errors, and thereby improving the image labeling capability.

In the embodiment of the present application, the image to be labeled and the labeling element corresponding to the image to be labeled are determined as the image labeling factors, and the association relationship between the image labeling factors is constructed, to label the image to be labeled based on the labeling element and the association relationship, so as to solve the problems of a low labeling efficiency and an insufficient labeling capability and the like of existing image labeling tools, thereby improving the labeling efficiency and the labeling capability of the image.

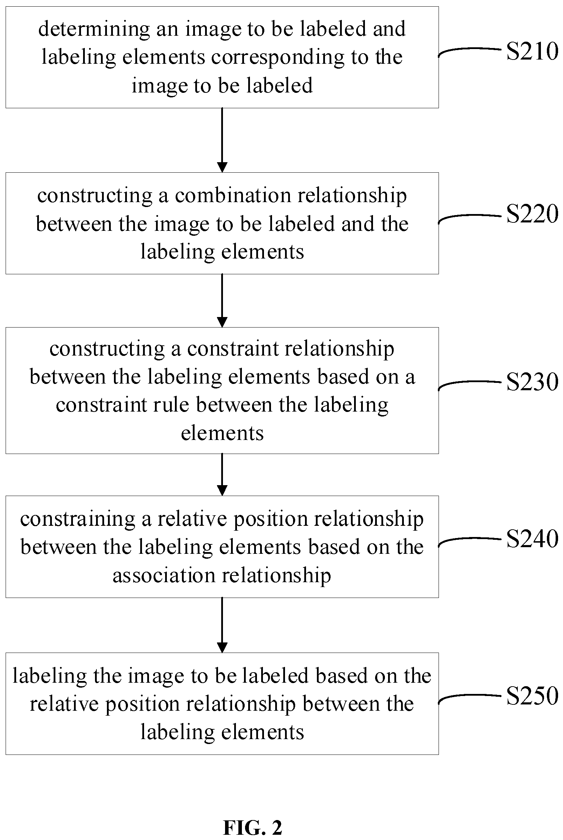

In an example, FIG. 2 is a flowchart of an image labeling method provided by an embodiment of the present application. On the basis of the technical solutions given in the above embodiments, the embodiment of the present application is optimized and improved, in which a plurality of specific and optional implementations are provided for constructing an association relationship between the image labeling factors, and labeling the image to be labeled based on the labeling element and the association relationship.

An image labeling method as shown in FIG. 2, includes:
a step S210: determining an image to be labeled and labeling elements corresponding to the image to be labeled; and
a step S220: constructing a combination relationship between the image to be labeled and the labeling elements.

Where the combination relationship may be used to represent the combination between the image to be labeled and the labeling elements.

Alternatively, when the association relationship between the image labeling factors is to be constructed, a combination relationship between the image to be labeled and the labeling element may be constructed. Exemplarily, there is a combination relationship between the image to be labeled and the box element, the dot element and the line element, and this shows that the labeling object in the image to be labeled can be labeled by using all of the box element, the dot element and the line element. Where the labeling object may be an obstacle, a key point of a human face, or a tracking target or the like, and the specific type of a labeling object is not limited in the embodiment of the present application.

By constructing the combination relationship between the image to be labeled and the labeling elements, it can be agreed that the image to be labeled can be labeled only with the labeling element that has a combination relationship with the image, so as to avoid a use error of the labeling element or the like problems.

A step S230: constructing a constraint relationship between the labeling elements based on a constraint rule between the labeling elements.

Where the constraint rule may be a restriction rule between the labeling elements required by a specific image labeling application scene for the labeling elements. For example, the constraint rule may be that the dot element must be labeled in an interior region of the box element or on the line element. The constraint relationship can be used to define the constraints between the labeling elements, and optionally, the relative positions between labeling elements can be limited.

In the embodiment of the present application, the constraint relationship may include, but is not limited to, an inclusion relationship, a connection relationship and an intersection-union-complement relationship. Where the inclusion relationship may indicate that the labeling elements are mutually inclusive. Exemplarily, assuming that the line element and the dot element have an inclusion relationship therebetween, when two types of labeling elements are used for labeling, the labeling dots need to be labeled on line segments of the labeling line. The connection relationship may indicate that the labeling elements are connected to each other. Exemplarily, assuming that there is a connection relationship between the line elements, the line segments need to be connected to each other. The intersection-union-complement relationship may indicate that the labeling elements are spliced with each other. Exemplarily, assuming that there is an intersection-union-complement relationship between region elements, the region elements can be automatically segmented and spliced with each other. In addition to the above constraint relationship, other types of constraint relationships may also be expanded based on specific image labeling scenes, which is not limited in the embodiments of the present application.

Alternatively, when the association relationship between the image labeling factors is to be constructed, it is also desirable to construct a constraint relationship between the labeling elements based on a constraint rule between the labeling elements. Exemplarily, the current image labeling scene is an obstacle labeling scene, which requires the automobile to be an obstacle, and its ground point must be labeled in the interior region of the labeling box. Correspondingly, after a combination relationship is established between the image to be labeled and the box element and the dot element, an inclusion relationship between the box element and the dot element may be further established, that is, restriction dots must be labeled in the interior region of the labeling box. In this constraint relationship, it is not allowable to label other non-dot-type labeling objects with the dot elements, such as separately labeling a red street lamp with a dot element.

By constructing the constraint relationship between the labeling elements, the labeling behavior between the labeling elements can be restricted, so as to avoid labeling errors, and thereby improving the image labeling capability.

A step S240: constraining a relative position relationship between the labeling elements based on the association relationship.

Alternatively, when the image to be labeled is to be labeled based on the labeling elements and the association relationship therebetween, the relative position relationship between the labeling elements needs to be constrained based on the association relationship. Exemplarily, assuming that there is an inclusion relationship between the dot element and the line element, it is necessary to constrain the line element to include the dot element, that is, the labeling dot needs to be set on the line segment of the labeling line. It should be noted that the labeling dot may be labeled on endpoints of the line segment or may be labeled on any dot within the line segment, and which is not limited in the embodiment of the present application.

A step S250: labeling the image to be labeled based on the relative position relationship between the labeling elements.

Correspondingly, after the relative position relationship between the labeling elements is determined, the image to be labeled can be labeled based on the relative position relationship between the labeling elements. When the labeling elements are used for labeling, if the current relative position relationship between the labeling elements satisfies the relative position relationship constrained by the labeling elements, the labeling elements can be used for labeling. If a labeling dot is placed on the endpoint of the labeling line, the labeling dot may be used for labeling. If the current relative position relationship between the labeling elements does not satisfy the relative position relationship constrained by the labeling elements, the labeling with the labeling elements is rejected. If the labeling dot is placed on a position dot outside the labeling line, it is forbidden to use the labeling dot to label the position dot.

In the above scheme, the relative position relationship between the labeling elements is constrained based on the association relationship, so as to label the image to be labeled based on the relative position relationship between the labeling elements, which thus can effectively avoid wrong use of the labeling elements and thereby improve the image labeling capability.

In an alternative embodiment of the present application, the labeling elements may include at least a box element and a dot element; the constructing the association relationship between the image labeling factors, may include: constructing a combination relationship between the image to be labeled and the labeling elements; and constructing an inclusion relationship between the box element and the dot element. The labeling the image to be labeled based on the relative position relationship between the labeling elements, may include: performing a box-selection labeling on a labeling object in the image to be labeled, based on the box element; and labeling a ground point of the labeling object in the image to be labeled, based on the dot element; wherein the dot element is contained in the interior region of the box element. This scheme can meet the requirements of mixed labeling for the application scenes, e.g., labeling an obstacle and a ground point.

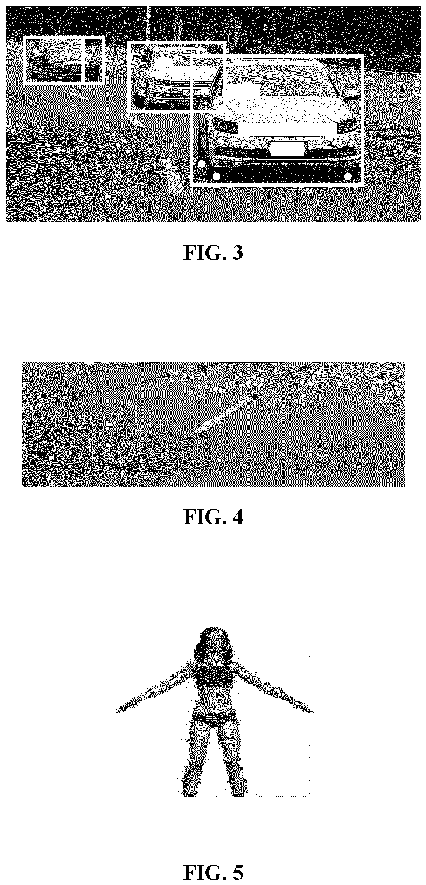

FIG. 3 is a schematic diagram of an effect of labeling obstacles and ground points based on an embodiment of the present application. Exemplarily, as shown in FIG. 3, description is given by taking an application scene in which obstacles and ground points in the automatic driving field are labeled as an example. Where the obstacles may be various types of vehicles. Before labeling the obstacle and the ground point in the image to be labeled, it is necessary to firstly construct a combination relationship between the image to be labeled and the labeling element. The labeling element may include at least a box element and a dot element. In addition, the labeling element may further include a segmentation box element and a cube element. Where the box element may be a labeling box for box-selecting and labeling an obstacle in a form of a rectangular box. The dot element may be a labeling point for labeling a ground point in the form of a point. In addition to being used to segment the obstacles, the segmentation box element can also label direction of the obstacle, e.g., can label a front direction of the vehicle or the like by means of diagonal lines or by filling color in the segmentation box. The cube element may be used to box-select and label the obstacle in the form of a stereoscopic box.

Since the ground point is a contact point between the obstacle and the ground, and when the box element, the segmentation box element and the cube element label the obstacle, the ground point is usually located at the bottom of the wheel, and the wheel is located in an interior region of a box line, and thus the ground point also needs to be located in the interior region of the box line. Therefore, when the association relationship between the image labeling factors is to be constructed, the inclusion relationship between the box element and the dot element can also be constructed at the same time. That is, it is necessary to constrain that the labeling dot functions to label in the interior region of the labeling box.

Correspondingly, after the combination relationship between the image to be labeled and the box element, the dot element, and the inclusion relationship between the box element and the dot element are determined, the labeling object in the image to be labeled can be box-selected and labeled based on the box element, and the ground point of the labeling object in the image to be labeled can be labeled based on the dot element. As shown in FIG. 3, all vehicles can be box-selected and labeled by using the box element, and the ground points of the vehicles can be labeled with the dot elements. Since there is an inclusion relationship between the box element and the dot element, it is required that the labeling dot must be labeled in the interior region of the labeling box, and therefore as shown in FIG. 3, the labeling dots of the two wheels on the left side of the rightmost vehicle are labeled respectively in the interior region of the labeling box.

In an alternative embodiment of the present application, the labeling elements may include at least a line element and a dot element; the constructing the association relationship between the image labeling factors, may include: constructing a combination relationship between the image to be labeled and the labeling elements, and constructing an inclusion relationship between the line element and the dot element; wherein the labeling the image to be labeled based on the relative position relationship between the labeling elements, may include: performing a line drawing labeling on a labeling object for labeling in the image to be labeled, based on the line element; and labeling the cut-off points of the labeling object based on the dot element; wherein the dot element is contained on a line segment of the line element. This scheme can meet the requirements of mixed labeling for the application scene in which lane lines and key points are labeled.

FIG. 4 is a schematic diagram of an effect of labeling lane lines and key points based on an embodiment of the present application. Exemplarily, as shown in FIG. 4, description is given by taking an application scene in which lane lines and key points in the automatic driving field are labeled as an example. Where the key point may be a cut-off point of the lane line, such as an end point or a turning point or the like. Before labeling the lane lines and the key points in the image to be labeled, it is necessary to firstly construct a combination relationship between the image to be labeled and the labeling element. Where the labeling element may include at least a line element and a dot element. Where the line element may be a line segment for labeling a lane line in the form of a straight line segment or a curved line segment. The dot element may be a labeling point for labeling a key point of the lane line in the form of a dot.

Since the key point is usually an end point or a turning point of the lane line, when the line element labels the lane line, the line segment of the line element may usually pass through or cover the key point. Therefore, when the association relationship between the image labeling factors is to be constructed, the inclusion relationship between the line element and the dot element can also be constructed at the same time. That is, it is necessary to constrain that the labeling dot functions to label on the line segment of the labeling line. Alternatively, the labeling point can label at any dot on the line segment.

Correspondingly, after the combination relationship between the image to be labeled and the line element, the dot element, and the inclusion relationship between the line element and the dot element are determined, the labeling object in the image to be labeled can be labeled by drawing a line based on the line element, and the cut-off point of the labeling object in the image to be labeled can be labeled based on the dot element. As shown in FIG. 4, all the lane lines, including white lines and lines extending between the white lines, may be labeled by drawing lines with the line elements, and the cut-off points of the lane lines may be labeled with the dot elements at the same time. Since there is an inclusion relationship between the line element and the dot element, it is required that the labeling point must label on the line segment of the labeling line, and thus all the labeling points as shown in FIG. 4 label on the labeling line.

In an alternative embodiment of the present application, the labeling element may include at least line elements; the constructing the association relationship between the image labeling factors, may include: constructing a combination relationship between the image to be labeled and the line elements, and constructing a connection relationship between the line elements; wherein the labeling the image to be labeled based on the relative position relationship between the labeling elements, may include: performing a line labeling on a labeling object in the image to be labeled, based on the line elements; wherein the line elements are connected to each other. This scheme can meet a single labeling requirement of the application scene in which the lane lines are labeled.

Description is given by taking an application scene in which the lane lines in the automatic driving field are labeled as an example. Before labeling the lane lines in the image to be labeled, it is necessary to firstly construct a combination relationship between the image to be labeled and the line element. Where the line element may be a line segment for labeling a lane line in the form of a straight line segment or a curved line segment.

It is assumed that the lane line is a white dotted line, and the labeling rule requires that the white dotted line is continuously labeled with a plurality of short line segments. When labeling the lane line with the white dotted line, a plurality of short lines are needed for labeling, and the short line segments needs to be connected with each other.

Correspondingly, after the combination relationship between the image to be labeled and the line elements, and the connection relationship between the line elements are determined, the labeling object in the image to be labeled can be labeled by drawing a line based on the line element. That is, all the lane lines, including white lines and lines extending between the white lines, may be labeled by drawing lines continuously with the line elements. Since there is a connection relationship between the line elements, it is required that the line elements need to be connected to each other. That is, the endpoints of two adjacent line segments coincide with each other.

In an alternative embodiment of the present application, the labeling element may include at least dot elements; wherein the constructing the association relationship between the image labeling factors, may include: constructing a combination relationship between the image to be labeled and the dot elements; wherein the labeling the image to be labeled based on the relative position relationship between the labeling elements, may include: performing a dot placement labeling on a labeling object in the image to be labeled, based on the dot elements; wherein the dot elements are not completely overlapped with each other. This scheme can meet a single labeling requirement of the application scene in which the key points are labeled.

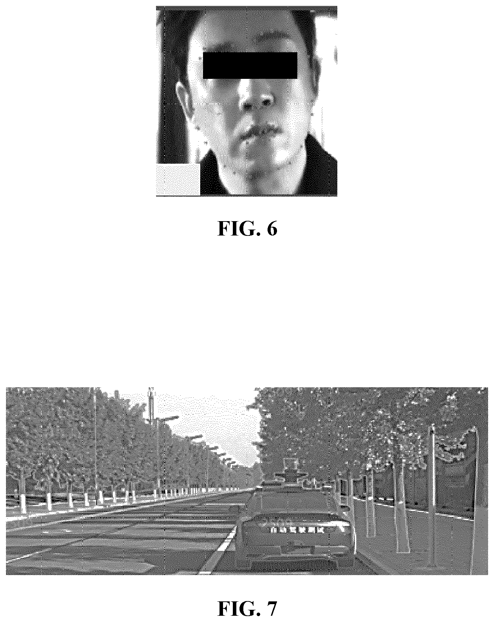

FIG. 5 is a schematic diagram of an effect of labeling key points provided by an embodiment of the present application, and FIG. 6 is a schematic diagram of an effect of labeling key points provided by an embodiment of the present application. Exemplarily, as shown in FIGs.5 and 6, description is given by taking an application scene in which human body bone key points and human face key points are labeled as an example. Where the key points may be key points of human body bone and a human face, such as boundary points on limbs or feature points of five sense organs, and the like. Before labeling the key points in the image to be labeled, it is necessary to firstly construct a combination relationship between the image to be labeled and the dot element. The dot element may be a labeling point for labeling the key points of the human body bone or the human face in the form of dots.

It can be understood that when the feature points are to be labeled, the points are usually separated from each other. In some scenes, part of the feature points may overlap partially. Therefore, when labeling the labeled image by using the labeling points, it is often required that the labeling dots cannot completely coincide with each other, that is, the labeling cannot be repeated. Similarly, when the labeling element is a single labeling element, other types of labeling elements cannot completely coincide with each other, so as to avoid repeated labeling. In this case, the constraint relationship between the labeling elements may not be set, and the image labeling tool may default that the labeling elements cannot completely coincide with each other; or, a complete exclusion relationship may be set for a single type of labeling element, which indicates that the labeling elements of a single type do not completely coincide with each other, and this is not limited in the embodiments of the present application.

Correspondingly, after the combination relationship between the image to be labeled and the dot element is determined, the labeling object in the image to be labeled can be dotted and labeled by using the dot elements. As shown in FIGs.5 and 6, all the key points or feature points may be dotted and labeled with the dot elements, and the dot elements are separated from each other.

In an alternative embodiment of the present application, the labeling element may include at least a region element; wherein the constructing the association relationship between the image labeling factors, may include: constructing a combination relationship between the image to be labeled and the region element, and constructing an intersection-union-complement relationship between the region elements; the labeling the image to be labeled based on the relative position relationship between the labeling elements, may include: performing a polygon region labeling on the labeling object in the image to be labeled, based on the region element; wherein the region elements are automatically segmented and spliced with each other. This scheme can meet a semantic labeling demand of an application scene in which region connectivity is labeled.

FIG. 7 is a schematic diagram of an effect of semantic labeling provided by an embodiment of the present application. Exemplarily, as shown in FIG. 7, description is given by taking an application scene of semantic labeling in the automatic driving field as an example. Where the so-called semantic labeling mean that the outline of a complete labeling object is labeled in the form of a region or a polygon, as shown in FIG. 7, the outline of an automobile is labeled in the form of a region; or, the overall outline of the same type of labeling objects is labeled, as shown in FIG. 7, the overall outline of all trees is labeled in the form of a region. At the same time, the regions of different labeling objects may also be configured with different colors, for example, the outline of the automobile is filled with rose red color, the outline of the trees is filled with green color, and the outline of telegraph poles is filled with purple color, and etc. Before labeling multiple labeling objects in the image to be labeled, it is necessary to firstly construct a combination relationship between the image to be labeled and the region element. The region element may be a polygon for labeling different labeling objects in the form of polygon connection.

It can be understood that when labeling different labeling objects in the same image to be labeled, if the same type of labeling objects are at such relative positions that they are connected, the same type of labeling objects in a unified region can be labeled in a large region; and if the same type of labeling objects are at such relative positions that they are far apart, it is necessary to label the labeling objects at different positions in different regions. However, the properties (such as filling color, and etc.) of the regions should be consistent to indicate that the labeling objects in both regions are of the same type. For example, if the trees are adjacent to each other, then all the trees adjacent to each other in a region can be divided into a complete polygon. If the telegraph poles are at such relative positions that they are far apart one another, the telegraph poles can be respectively labeled in different regions respectively, but the colors filled in the regions corresponding to the telegraph poles shall be consistent.

Correspondingly, after the combination relationship between the image to be labeled and the region elements is determined, the intersection-union-complement relationship between the region elements can also be constructed at the same time. The effect of constructing the intersection-union-complement relationship between the region elements is that the region elements can be automatically segmented and spliced with each other through the set intersection-union-complement relationship. As shown in FIG. 7, when the automobiles, the trees, the roads and the telegraph poles are labeled in different regions, polygonal outlines between the automobiles, the trees, the roads and the telegraph poles are closely separated from each other. However, when the trees in the same region are labeled by the region, data in the same region can be labeled by using a complete polygon, and the telegraph poles between the trees can be labeled by additional polygons for distinguishing.

In the above technical scheme, the combination relationship between the image to be labeled and different labeling elements and the constraint relationship between the labeling elements can be established, in this way the application requirements of multiple different image labeling scenes can be met, so as to improve the labeling efficiency and the labeling capability of the image and reduce the cost of the image labeling.

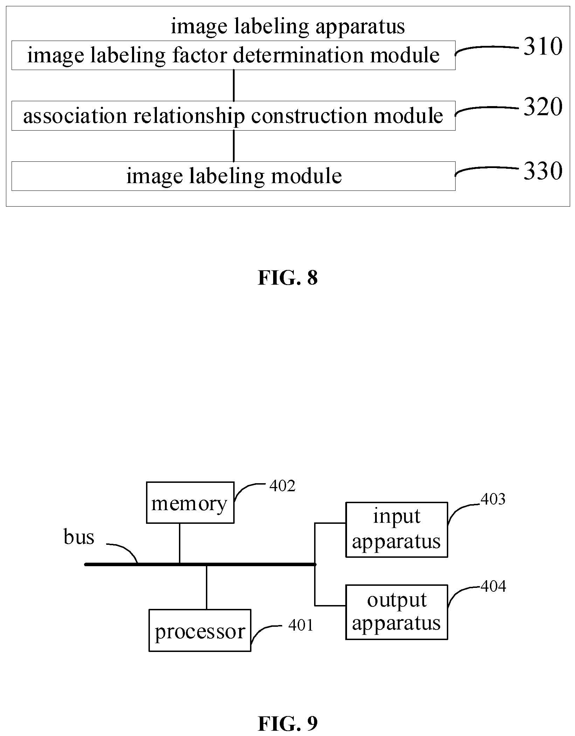

In an example, FIG. 8 is a structural diagram of an image labeling apparatus provided by an embodiment of the present application. The embodiment of the present application is applicable to the case where application scene images with different labeling requirements are labeled by using a unified image labeling tool. The apparatus may be implemented by means of software and/or hardware, and may specifically be configured in an electronic device. The electronic device may be a computer device.

As shown in FIG. 8, an image labeling apparatus 300 includes: an image labeling factor determination module 310, an association relationship construction module 320 and an image labeling module 330. Wherein,
an image labeling factor determination module 310 is used for determining image labeling factors, wherein the image labeling factors include an image to be labeled and labeling elements corresponding to the image to be labeled;
an association relationship construction module 320 is used for constructing an association relationship between the image labeling factors; and
an image labeling module 330 is used for labeling the image to be labeled based on the labeling elements and the association relationship.

In the embodiment of the present application, the image to be labeled and the labeling element corresponding to the image to be labeled are determined as the image labeling factors, and the association relationship between the image labeling factors is constructed, to label the image to be labeled based on the labeling element and the association relationship, so as to solve the problems of a low labeling efficiency and an insufficient labeling capability and the like of existing image labeling tools, thereby improving the labeling efficiency and the labeling capability of the image.

Alternatively, the association relationship construction module 320 is specifically used for constructing a combination relationship between the image to be labeled and the region element.

Alternatively, the association relationship construction module 320 is specifically used for constructing a constraint relationship between the labeling elements based on a constraint rule between the labeling elements, wherein the constraint relationship includes an inclusion relationship, a connection relationship and an intersection-union-complement relationship.

Alternatively, the labeling elements include a box element, a segmentation box element, a dot element, a line element, a region element, and a cube element.

Alternatively, the image labeling module 330 is specifically used for: constraining a relative position relationship between the labeling elements based on the association relationship; and labeling the image to be labeled based on the relative position relationship between the labeling elements.

Alternatively, the labeling elements include at least a box element and a dot element. The association relationship construction module 320 is specifically used for constructing a combination relationship between the image to be labeled and the labeling elements, and constructing an inclusion relationship between the box element and the dot element. The image labeling module 330 is specifically used for: performing a box-selection labeling on a labeling object in the image to be labeled, based on the box element; and labeling a ground point of the labeling object in the image to be labeled, based on the dot element; wherein the dot element is contained in an interior region of the box element.

Alternatively, the labeling elements include at least a line element and a dot element. The association relationship construction module 320 is specifically used for constructing a combination relationship between the image to be labeled and the labeling elements, and constructing an inclusion relationship between the line element and the dot element. The image labeling module 330 is specifically used for: performing a line drawing labeling on a labeling object for labeling in the image to be labeled, based on the line element; and labeling cut-off points of the labeling object based on the dot element; wherein the dot element is contained on a line segment of the line element.

Alternatively, the labeling element includes at least a line element. The association relationship construction module 320 is specifically used for constructing a combination relationship between the image to be labeled and the line elements, and constructing a connection relationship between the line elements. The image labeling module 330 is specifically used for performing a line drawing labeling on a labeling object in the image to be labeled, based on the line elements, wherein the line elements are connected to each other.

Alternatively, the labeling element includes at least dot elements. The association relationship construction module 320 is specifically used for constructing a combination relationship between the image to be labeled and the dot elements. The image labeling module 330 is specifically used for performing a dot placement labeling on a labeling object in the image to be labeled, based on the dot elements; wherein the dot elements are not completely overlapped with each other.

Alternatively, the labeling element includes at least a region element. The association relationship construction module 320 is specifically used for constructing a combination relationship between the image to be labeled and the region element, and constructing an intersection-union-complement relationship between the region elements. The image labeling module 330 is specifically used for performing a polygon region labeling on the labeling object in the image to be labeled, based on the region element; wherein the region elements are automatically segmented and spliced with each other.

The above image labeling apparatus can execute the image labeling method provided by any of the embodiments of the present application, and has corresponding functional modules and beneficial effects for executing the method. For technical details that are not described in detail in this embodiment, reference may be made to the image labeling method provided in any embodiment of the present application.

Since the image labeling apparatus described above is an apparatus that can execute the image labeling method in the embodiment of the present application, therefore, based on the image labeling method described in the embodiment of the present application, those skilled in the art will appreciate the specific implementation of the image labeling apparatus of this embodiment and various variations thereof, so that how the image labeling apparatus implements the image labeling method in the embodiment of the present application will not be described in detail here. Any apparatus used by those skilled in the art to implement the image labeling method in the embodiment of the present application falls within the scope of the present application.

In an example, the present application further provides an electronic device and a readable storage medium.

FIG. 9 is a structural schematic diagram of an electronic device used to implement an image labeling method based on an embodiment of the present application. As shown in FIG. 9, a block diagram is shown of an electronic device for an image labeling method based on an embodiment of the present application. The electronic device is intended to represent various forms of digital computers, such as a laptop computer, a desktop computer, a work table, a personal digital assistant, a server, a blade server, a mainframe computer, and other suitable computers. The electronic device can also represent various forms of mobile devices, such as personal digital processing, a cellular phone, a smart phone, a wearable device, and other similar computing devices. The components shown herein, their connections and relationships, and their functions are merely examples, and are not intended to limit the implementation of the present application described and/or required herein.

As shown in FIG. 9, the electronic device includes: one or more processors 401 and memories 402, and an interface for connecting the components, including a high-speed interface and a low-speed interface. The components are connected to each other by using different buses, and can be installed on a common motherboard or installed in other ways as required. The processor may process instructions executed in the electronic device, including instructions stored in or on the memory to display graphical information of GUI (Graphical User Interface) on an external input/output apparatus (such as a display device coupled to an interface). In other embodiments, if necessary, multiple processors and/or multiple buses can be used together with multiple memories. Similarly, multiple electronic devices can be connected, and each device provides some necessary operations (for example, as a server array, a group of blade servers, or a multi-processor system). One processor 401 is taken as an example in FIG. 9.

The memory 402 is the non-transitory computer readable storage medium provided in the present application. Wherein, the memory stores instructions that can be executed by at least one processor, so that the at least one processor executes the image labeling method provided in the present application. The non-transitory computer readable storage medium of the present application stores computer instructions, and the computer instructions are used to cause a computer to execute the image labeling method provided in the present application.

As a non-transitory computer readable storage medium, the memory 402 can be used to store non-transitory software programs, non-transitory computer executable programs and modules, such as program instructions/modules corresponding to the image labeling method in the embodiment of the present application (such as the image labeling factor determination module 310, the association relationship construction module 320 and the image labeling module 330 that are shown in FIG. 8). The processor 401 executes various functional applications and data processing of the server by running the non-transitory software programs, the instructions and the modules that are stored in the memory 402, that is, implementing the image labeling method in the foregoing method embodiment.

The memory 402 may include a program storage area and a data storage area, wherein the program storage area may store an operating system and an application program required by at least one function; the data storage area may store data created based on use of an electronic device for implementing the image labeling method. Moreover, the memory 402 may include a high-speed random access memory, and may also include a non-transitory memory, such as at least one magnetic disk storage device, a flash memory device, or other non-transitory solid-state storage devices. In some embodiments, the memory 402 may optionally include a memory provided remotely with respect to the processor 401, and these remote memories may be connected to the electronic device for implementing the image labeling method via a network. Examples of the aforementioned network include, but are not limited to, Internet, a corporate Intranet, a local area network, a mobile communication network, and combinations thereof.

The electronic device for implementing the image labeling method may further include: an input apparatus 403 and an output apparatus 404. The processor 401, the memory 402, the input apparatus 403, and the output apparatus 404 may be connected through a bus or other methods, and in FIG. 9, for example, through a bus.

The input apparatus 403 can receive the input numeric or character information, and generate a key signal input related to user setting and function control of the electronic device for implementing the image labeling method, such as a touch screen, a keypad, a mouse, a track pad, a touch pad, an indicating rod, one or more mouse buttons, trackballs, joysticks and other input apparatuses. The output apparatus 404 may include a display device, an auxiliary lighting apparatus (for example, an LED), a haptic feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the system and technologies described herein can be implemented in a digital electronic circuit system, an integrated circuit system, an application-specific integrated circuit (ASIC), a computer hardware, a firmware, a software, and/or combinations thereof. These various embodiments may include: being implemented in one or more computer programs, the one or more computer programs may be executed and/or interpreted on a programmable system including at least one programmable processor, the programmable processor can be a dedicated or general-purpose programmable processor that can receive data and instructions from a storage system, at least one input apparatus, and at least one output apparatus, and transmit the data and instructions to the storage system, the at least one input apparatus, and the at least one output apparatus.

These computation programs (also referred to as programs, software, software application, or codes) include machine instructions of the programmable processors, and these computation programs can be implemented by using high-level procedures and/or object-oriented programming languages, and/or assembly/machine languages. As used herein, the terms "machine readable media" and "computer readable media" refer to any computer program product, device, and/or apparatus (such as a magnetic disk, an optical disk, a memory, a programmable logic devices (PLD)) used to provide machine instructions and/or data to a programmable processor, including a machine readable media that receives machine instructions as machine readable signals. The term "machine readable signals" refers to any signal used to provide machine instructions and/or data to a programmable processor.

In order to provide interaction with the user, the system and technology described herein can be implemented on a computer that has: a display device for displaying information to the user (such as a CRT (cathode ray tube) or an LCD (liquid crystal display) monitor)); and a keyboard and a pointing device (such as a mouse or a trackball) through which the user can provide the input to the computer. Other types of apparatuses can also be used to provide interaction with the user; for example, the feedback provided to the user can be any form of sensing feedback (for example, visual feedback, auditory feedback, or haptic feedback); and the input from the user can be received in any form (including acoustic input, voice input, or haptic input).

The system and technology described herein can be implemented in a computing system including back-end components (for example, as a data server), or a computing system including middleware components (for example, an application server), or a computing system including front-end components (for example, a user computer having a graphical user interface or a web browser through which the user can interact with the embodiment of the system and technology described herein), or a computing system including any combination of such back-end components, middleware components or front-end components. The components of the system can be connected to each other through digital data communication (for example, a communication network) in any form or media. Examples of the communication network include: a local area network (LAN), a wide area network (WAN), and an Internet.

The computer system can include a client and a server. The client may be, but is not limited to, a smart phone, a laptop, a desktop computer, a tablet computer, a smart speaker, or the like. The server may be an independent physical server, or may be a server cluster composed of a plurality of physical servers or a distributed system, and may also be a cloud server that provides basic cloud computing services such as cloud computing, cloud services, cloud databases, and cloud storage and the like. The client and the server are generally far away from each other and usually interact through a communication network. The relationship between the client and the server is generated by computer programs that run on the corresponding computers and have a client-server relationship with each other.

In the embodiment of the present application, the image to be labeled and the labeling element corresponding to the image to be labeled are determined as the image labeling factors, and the association relationship between the image labeling factors is constructed, to label the image to be labeled based on the labeling element and the association relationship, so as to solve the problems of a low labeling efficiency and an insufficient labeling capability and the like of existing image labeling tools, thereby improving the labeling efficiency and the labeling capability of the image.

It should be understood that the various forms of processes shown above can be used to reorder, add or delete steps. For example, the steps described in the present application can be performed in parallel, or in sequence or in a different order, as long as the result desired by the technical solution disclosed in the present application can be achieved, and this is not limited herein.

The foregoing specific embodiments do not constitute limitation to the protection scope of the present application. Those skilled in the art should understand that various modifications, combinations, sub-combinations, and substitutions can be made based on design requirements and other factors. Any amendments, equivalent substitutions and improvements made within the spirit and principle of the present application are intended to be included within the protection scope of the present application.

## Claims

1. An image labeling method, comprising:
determining (S110) image labeling factors, wherein the image labeling factors comprise an image to be labeled and labeling elements corresponding to the image to be labeled;
constructing (S120) an association relationship between the image labeling factors; and
labeling (S130) the image to be labeled based on the labeling elements and the association relationship.

2. The image labeling method according to claim 1, wherein constructing (S120) the association relationship between the image labeling factors comprises:
constructing (S220) a combination relationship between the image to be labeled and the labeling elements.

3. The image labeling method according to claim 1, wherein constructing (S120) the association relationship between the image labeling factors comprises:
constructing (S230) a constraint relationship between the labeling elements based on a constraint rule between the labeling elements;
wherein the constraint relationship comprises an inclusion relationship, a connection relationship, and an intersection-union-complement relationship.

4. The image labeling method according to claim 2 or 3, wherein the labeling elements comprise a box element, a segmentation box element, a dot element, a line element, a region element, and a cube element.

5. The image labeling method according to claim 1, wherein labeling (S130) the image to be labeled based on the labeling elements and the association relationship comprises:
constraining (S240) a relative position relationship between the labeling elements based on the association relationship; and
labeling (S250) the image to be labeled based on the relative position relationship between the labeling elements.

6. The image labeling method according to claim 5, wherein the labeling elements comprise at least a box element and a dot element;
wherein constructing (S120) the association relationship between the image labeling factors comprises:
constructing a combination relationship between the image to be labeled and the labeling elements; and
constructing an inclusion relationship between the box element and the dot element;
wherein labeling (S250) the image to be labeled based on the relative position relationship between the labeling elements comprises:
performing a box-selection labeling on a labeling object in the image to be labeled based on the box element; and
labeling a ground point of the labeling object in the image to be labeled, based on the dot element;
wherein the dot element is contained in an interior region of the box element.

7. The image labeling method according to claim 5, wherein the labeling elements comprise at least a line element and a dot element;
wherein constructing (S120) the association relationship between the image labeling factors comprises:
constructing a combination relationship between the image to be labeled and the labeling elements; and
constructing an inclusion relationship between the line element and the dot element;
wherein the labeling (S250) the image to be labeled based on the relative position relationship between the labeling elements comprises:
performing a line drawing labeling on a labeling object for labeling in the image to be labeled based on the line element; and
labeling cut-off points of the labeling object based on the dot element;
wherein the dot element is contained on a line segment of the line element.

8. The image labeling method according to claim 5, wherein the labeling elements comprise at least line elements;
wherein constructing (S120) the association relationship between the image labeling factors comprises:
constructing a combination relationship between the image to be labeled and the line elements, and
constructing a connection relationship between the line elements;
wherein the labeling (S250) the image to be labeled based on the relative position relationship between the labeling elements comprises:
performing a line drawing labeling on a labeling object in the image to be labeled based on the line elements;
wherein the line elements are connected to each other.

9. The image labeling method according to claim 5, wherein the labeling element comprises at least dot elements;
wherein constructing (S120) the association relationship between the image labeling factors comprises:
constructing a combination relationship between the image to be labeled and the dot elements;
wherein labeling (S250) the image to be labeled based on the relative position relationship between the labeling elements comprises:
performing a dot placement labeling on a labeling object in the image to be labeled based on the dot elements;
wherein the dot elements are not completely overlapped with each other.

10. The image labeling method according to claim 5, wherein the labeling element comprises at least a region element;
wherein constructing (S120) the association relationship between the image labeling factors comprises:
constructing a combination relationship between the image to be labeled and the region element, and
constructing an intersection-union-complement relationship between the region elements;
wherein labeling (S250) the image to be labeled based on the relative position relationship between the labeling elements comprises:
performing a polygon region labeling on the labeling object in the image to be labeled based on the region element;
wherein the region elements are automatically segmented and spliced with each other.

11. An image labeling apparatus (300), comprising a plurality of modules configured to implement the image labeling method according to any one of claims 1 to 10.

12. An electronic device, comprising:
at least one processor (401); and
a memory (402) communicatively connected to the at least one processor (401), wherein
the memory (402) stores instructions executable by the at least one processor (401), and the instructions, when executed by the at least one processor (401), enable the at least one processor (401) to execute the image labeling method based on any one of claims 1 to 10.

13. A computer readable storage medium for storing computer instructions, wherein the computer instructions, when executed by a computer, cause the computer to implement the image labeling method based on any one of claims 1 to 10.

14. A computer program product comprising computer executable instructions stored thereon, wherein the executable instructions, when executed by a processor (401), cause the processor (401) to implement the image labeling method according to any one of claims 1 to 10.
